# EUROPEAN PATENT SPECIFICATION

(11) **EP 4 239 770 B1**
(45) Date of publication and mention of the grant of the patent: **01.10.2025**
(21) Application number: 23160066.9
(22) Date of filing: 03.03.2023
(51) Int. Cl.: H01M 50/213, H01M 50/247, H01M 50/271, H01M 50/262, H01M 50/296, H01M 50/507, H01M 50/244, B25F 5/02

(54) **BATTERY PACK WITH DOUBLE SHEAR CONNECTION**
BATTERIEPACK MIT DOPPELTER SCHERVERBINDUNG
BLOC-BATTERIE À DOUBLE LIAISON PAR CISAILLEMENT

(30) Priority: 04.03.2022 US 202263316820 P
(43) Date of publication of application: 06.09.2023
(73) Proprietor: Milwaukee Electric Tool Corporation, Brookfield, WI 53005 (US)
(72) Inventor: GUDIMANI, Gurusiddeshwar, Plymouth, 53073 (US); SCHULZ, Cameron R., Milwaukee, 53213 (US); MARX, John G., Hartford, 53027 (US); SILHA, Wyatt R., Milwaukee, 53210 (US); WACKWITZ, Jeffrey M., Waukesha, 53186 (US)
(74) Representative: Forresters IP LLP

(56) References cited:
- WO-A1-2019/063212
- WO-A1-2021/144153
- DE-A1- 102017 217 503
- US-A1- 2019 027 720
- US-A1- 2019 058 171
- US-A1- 2022 013 847

## Description

### FIELD

The invention generally relates to battery packs for use with electrical devices, such as tools, and, more particularly, to a battery cell module for a battery pack.

### SUMMARY

Cordless tools, such as power tools (e.g., drills, drivers, saws, nailers, grinders, etc.), outdoor tools (e.g., trimmers, pole saws, blowers, etc.), etc., and other electrical devices (e.g., motorized devices, non-motorized devices, chargers, etc.) (generally referred to herein as "devices" or a "device") are powered by a rechargeable battery pack. The battery pack may be detached from a device for charging or for use with other devices. For example, US 2019058171A1, US 2022013847A1 and WO 2019063212A1 describe such kinds of rechargeable battery packs.

In one independent aspect, battery pack is configured to be coupled to an electrical device. The battery pack includes a plurality of battery cells, a battery cell carrier configured to support the plurality of battery cells, a housing having an upper housing portion and a lower housing portion defining an internal compartment configured to receive the battery cell carrier. The battery cell carrier having a plurality of connector screw bosses formed on a top side. The upper housing portion having an outer screw boss on each lateral side and a respective inner screw boss formed on an inner surface of the upper housing portion. The upper housing portion is connected to the battery cell carrier with a plurality of first threaded fasteners each extending through one of the outer screw bosses, a respective one of the plurality of connector screw bosses, and a respective inner screw boss creating a double shear condition on each side of each of respective one of the plurality of connector screw bosses.

In some constructions, each of the outer screw bosses, the respective one of the plurality of connector screw bosses, and the respective inner screw bosses are aligned. In some constructions, each of the plurality of first threaded fasteners pass through the upper housing portion twice and on one side of the battery cell carrier. In some constructions, the lower housing portion is connected to the battery cell carrier with a plurality of second threaded fasteners. In some constructions, the electrical device is a power tool.

In some constructions, the battery cell carrier includes a first half portion and a second half portion. In some constructions, the first half portion and the second half portion are connected via a plurality of third threaded fasteners. In some constructions, the plurality of connector screw bosses is formed on the first half portion. In some constructions, each of the plurality of battery cells are cylindrical-shaped. In some constructions, the plurality of battery cells supported in the battery cell carrier are in a compact arrangement. In some constructions, the plurality of first threaded fasteners are screws.

In some constructions, the battery pack further includes a terminal block coupled to the battery cell carrier on the top side and providing electrical communication between the battery cell carrier and the electrical device. In some constructions, the battery cell carrier includes a plurality of cell connectors configured to engage with the cell terminals of each of the plurality of battery cells, and wherein the terminal block includes a plurality of strap elements each coupled to one of the plurality of cell connectors.

Other independent aspects of the invention may become apparent by consideration of the detailed description and accompanying drawings.

### BRIEF DESCRIPTION OF THE DRAWINGS

FIG. 1 is a top perspective view of a battery pack operable with an electrical device.
FIG. 2A is a top perspective of a lower housing of the battery pack of Fig. 1.
FIG. 2B is a perspective of the lower housing of the battery pack of Fig. 1.
FIG. 3A is a bottom perspective of an upper housing of the battery pack of Fig. 1.
FIG. 3B is another bottom perspective of the upper housing of the battery pack of Fig. 1.
Fig. 4A is a partially exploded top perspective view of an outer housing of the battery pack of Fig. 1.
Fig. 4B is another partially exploded top perspective view of the outer housing of the battery pack of Fig. 1.
FIG. 5 is a top perspective view of the battery pack of Fig. 1 wit the upper housing removed.
FIG. 6A is a top perspective view of the internal components of the battery pack of Fig. 1.
FIG. 6B is another top perspective view of the internal components of the battery pack of Fig. 1.
FIG. 7A is a cross-sectional view of the battery pack of FIG. 1 along the lines 7A-7A of FIG. 1.
FIG. 7B is a cross-sectional view of the battery pack of FIG. 1 along the lines 7B-7B of FIG. 1.
FIG. 8 is a top perspective of a terminal block of the battery pack of Fig. 1.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways within the scope of the appended claims.

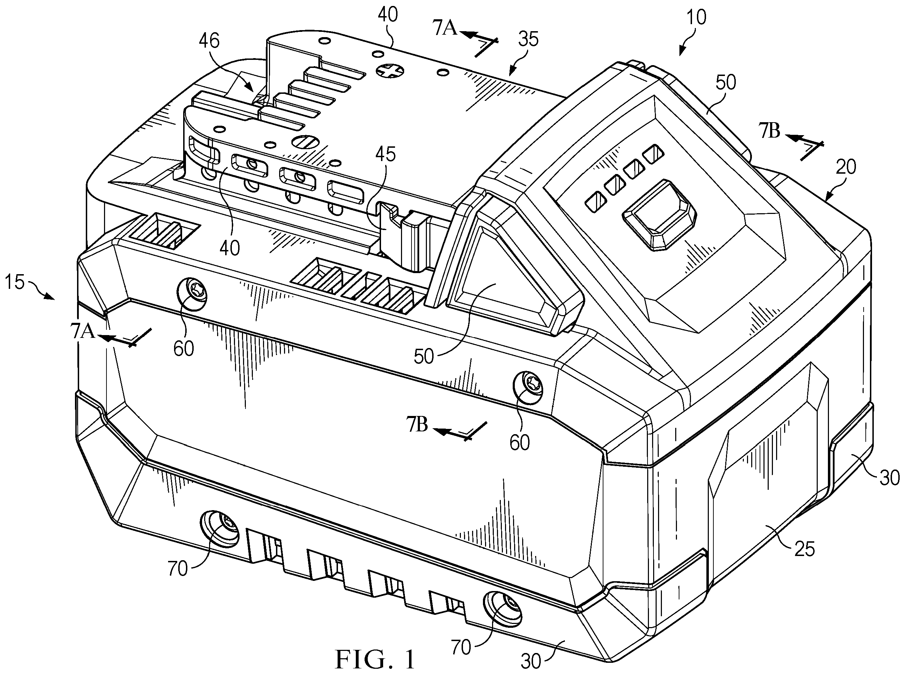

FIG. 1 illustrates a removable and rechargeable battery pack 10 operable to selectively power an electrical device (not shown; e.g., a power tool (e.g., a drill, a driver, a saw, a nailer, a grinder, etc.), an outdoor tool (e.g., a trimmer, a pole saw, etc.), etc., and another electrical device (e.g., a motorized device, a non-motorized device, etc.)). The battery pack 10 is also connectable to a charger (not shown) for charging.

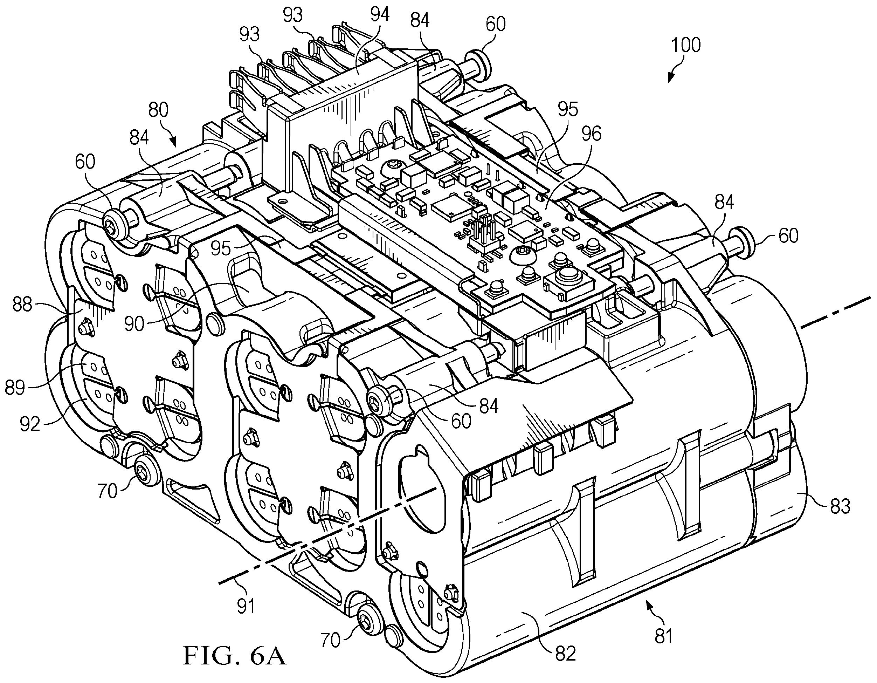

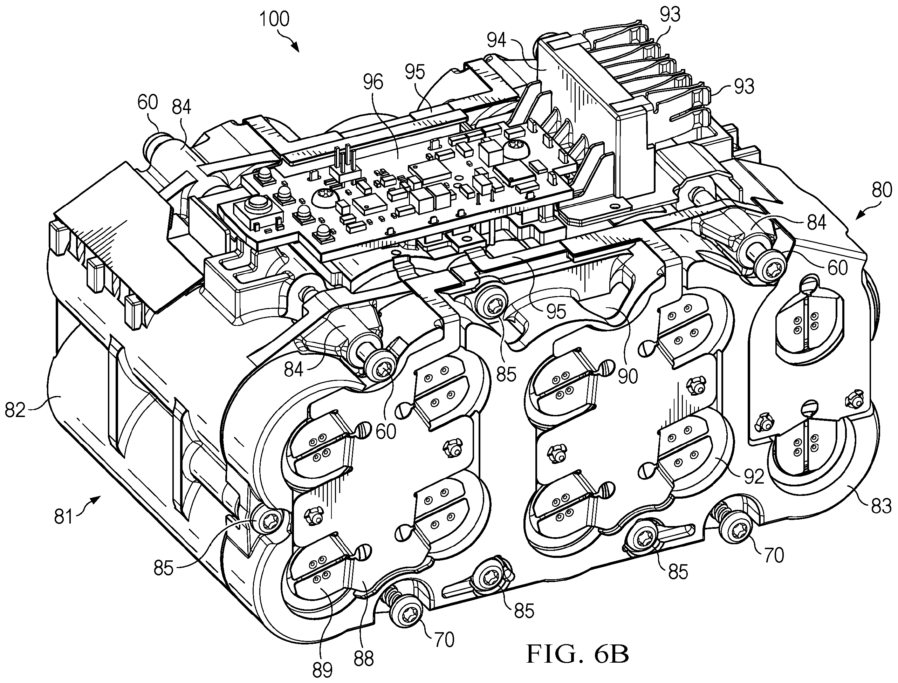

The battery pack 10 includes an outer housing 15 formed, in the illustrated construction, of an upper housing portion 20 and a lower housing portion 25. The battery pack 10 also includes a battery cell carrier 80 (e.g., a battery cell core; FIGS. 6A and 6B) coupled to the outer housing 15 between the upper housing portion 20 and the lower housing portion 25. In the illustrated construction, a pair of protective cap elements 30 are connected to the lower housing portion 25 at the bottom and on either lateral side.

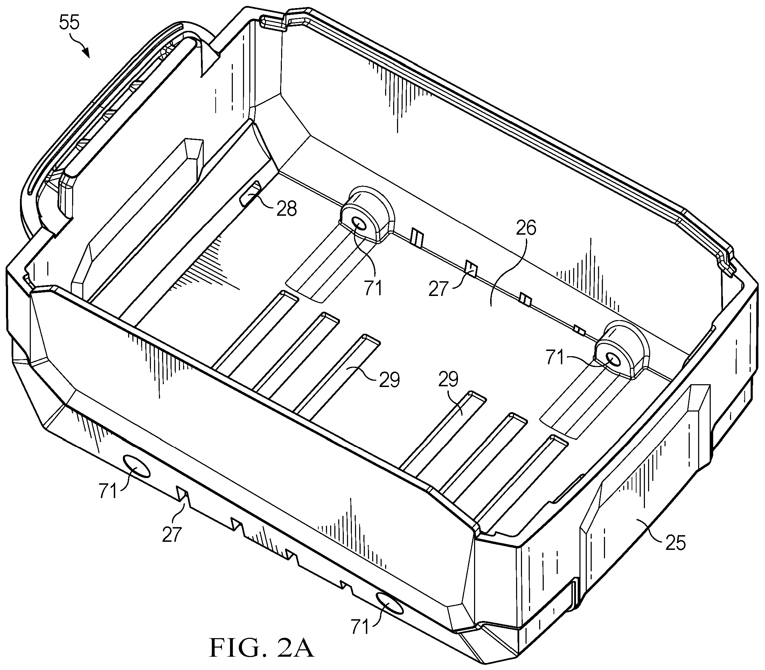

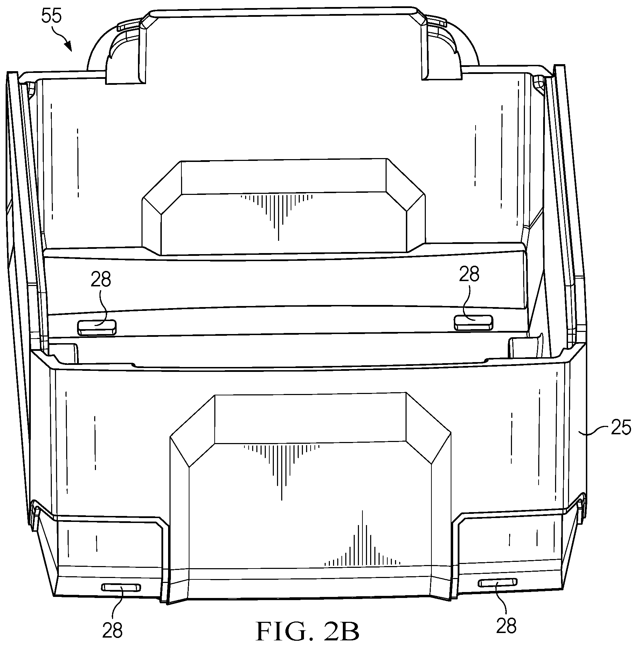

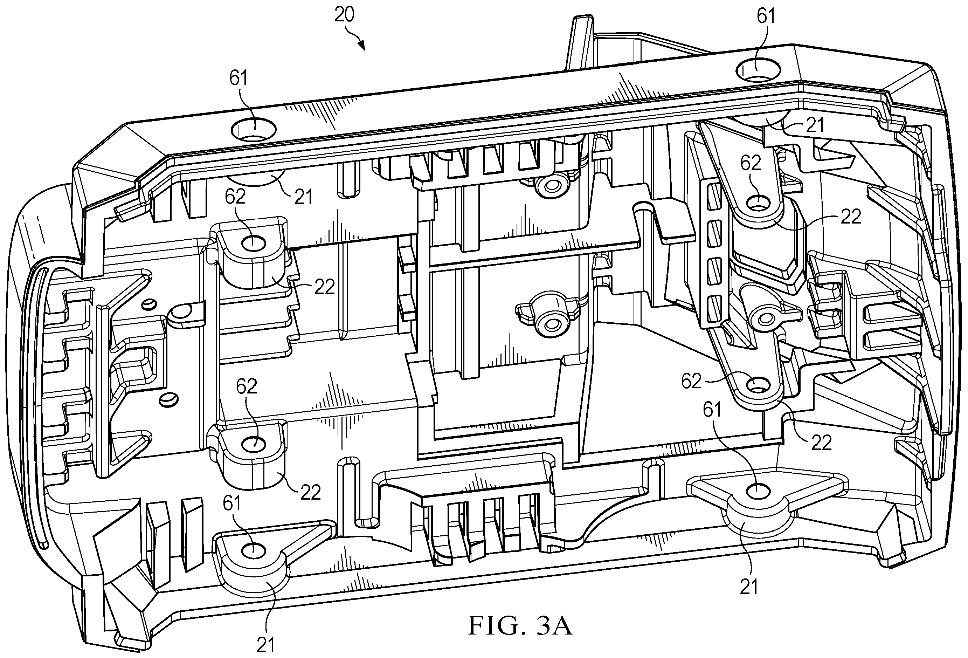

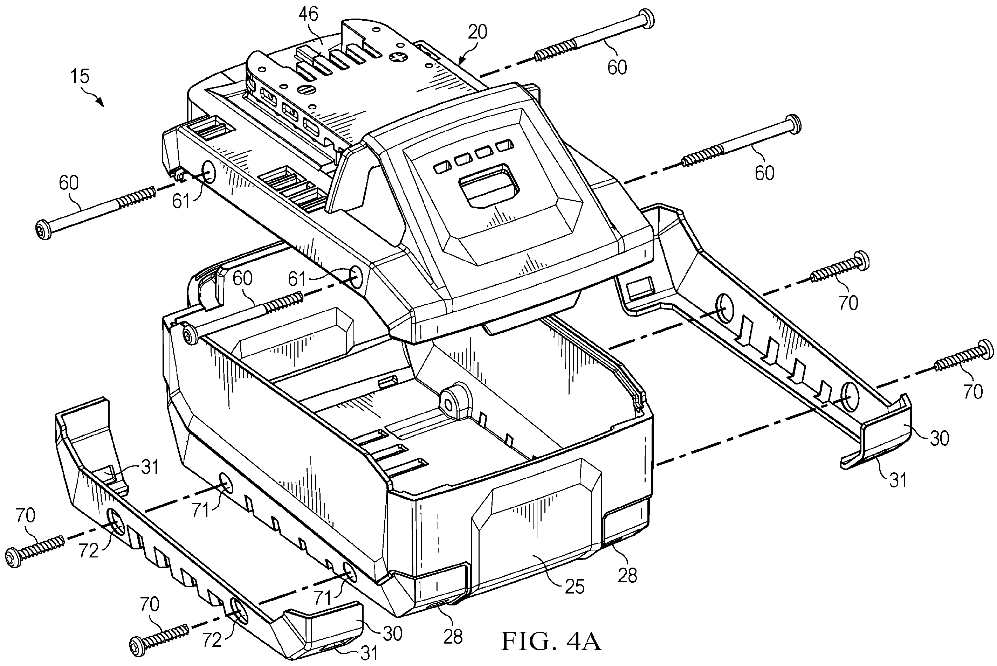

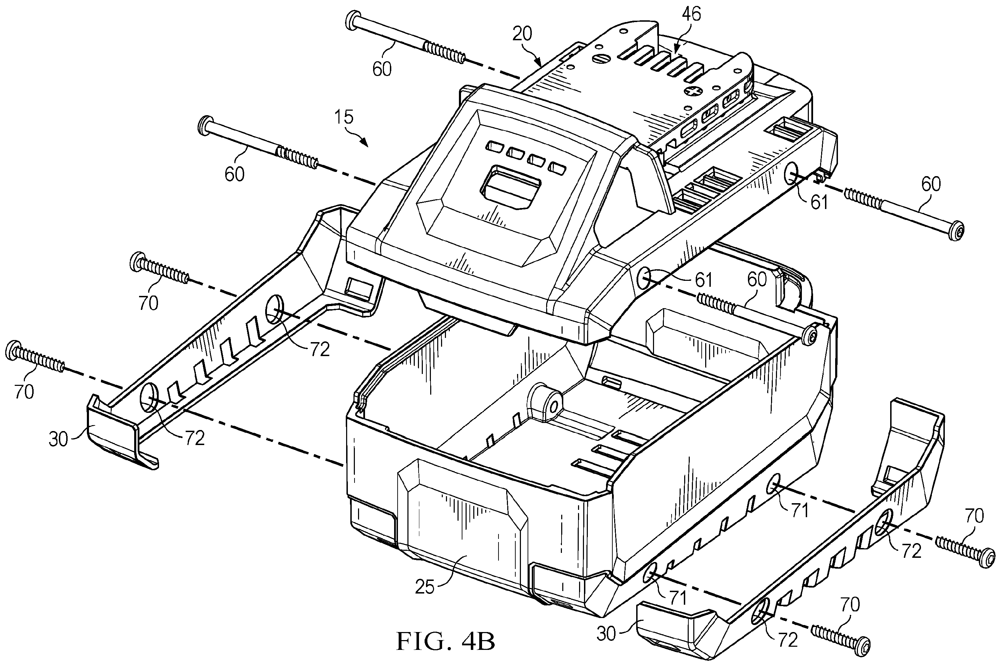

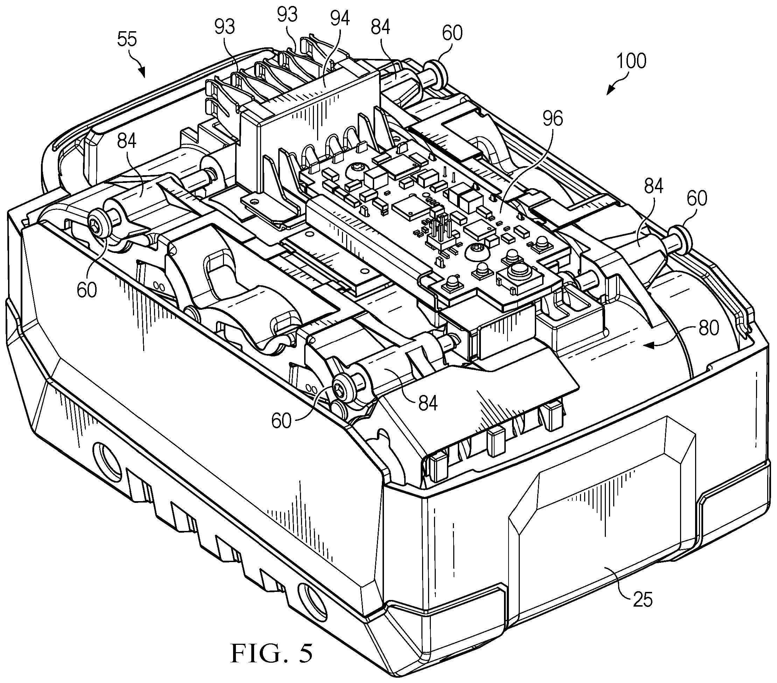

In the illustrated construction, the upper housing portion 20 is connected to the battery cell carrier 80 with threaded fasteners 60 (e.g., screws) that extend through complementary fastening holes 61 and 62 (Figs. 3A-4B, 7A, 7B). In the illustrated construction, the lower housing portion 25 and the protective cap elements 30 are connected to the battery cell carrier 80 with threaded fasteners 70 that extend through complementary fastening holes 71 form in the lower housing portion 25 and complementary fastening holes 72 formed in each of the protective cap elements 30. In other constructions (not shown), the housing portions 20 and 25 and the protective cap elements 30 are connected with other suitable coupling means. Together, the upper housing portion 20 and the lower housing portion 25 define an internal compartment within the outer housing 15 containing internal components 100 (FIG. 5), including the battery cell carrier 80 of the battery pack 10. The internal compartment is formed primarily from the internal cavity 55 formed by the lower housing portion 25 (FIGS. 2A, 2B).

In the illustrated construction, the lower housing 25 (FIGS. 2A, 2B) includes a number of drainage holes 27 formed on the lateral sides and adjacent to a bottom surface 26. The lower housing 25 also includes drainage holes 28 formed on both the front and back sides and adjacent to a bottom surface 26. Each of the drainage holes 27 and 28 communicating between the inside of the lower housing 25 Four drainage holes 27 are depicted on each lateral side and two drainage holes 28 are depicted on each of the front and back sides; however, other constructions may include more or less drainage holes. In the illustrated construction, the lower housing 25 also includes vent holes 29 formed on the bottom surface 26 through which air flows into the outer housing 15 from the outside of the outer housing 15. Six vent holes 29 are depicted; however, other constructions may include more or less vent holes.

The upper housing portion 20 includes connection features 35 that are operable to selectively couple the battery pack 10 to an electrical device (e.g., a drill, a reciprocating saw, a grinder, etc.) (not shown). For example, the connection features 35 include rails 40 that are sized to slidably interface with the electrical device and at least one latch 45 that holds the battery pack 10 to the electrical device. At least one release actuator 50 is coupled to the upper housing portion 20 and is operable to move the latch 45 to detach the battery pack 10 from the electrical device. In other embodiments, the battery pack 10 can be coupled to a different implement (e.g., portable lighting, lawn care equipment such as lawn mowers, chainsaws, blowers, etc.). In further embodiments, the battery pack 10 can be configured as a stem-style battery pack. Terminal openings 46 are formed in the connection features 35 adjacent battery pack terminals 93 (Figs. 5-6B, and 8). The terminal openings 46 provide access to the battery pack terminals 93 to provide an electrical connection between the battery pack 10 and the electrical device

With reference to FIG. 5, the battery cell carrier 80 supported inside the outer housing 15 within the internal compartment. In the illustrated construction, the battery cell carrier 80 is received within a cavity 55 of the lower housing portion 25 for the lower housing portion 25 to support the battery cell carrier 80.

With reference to FIGS. 6A and 6B, the battery cell carrier 80 includes a module frame 81 that supports battery cells 90 (e.g., cylindrical-shaped battery cells) in a compact arrangement within the battery pack 10. In the illustrated construction, the module frame 81 includes first and second frame halves 82, 83 connected with threaded fasteners 85 (e.g., screws) (Fig. 6B). When assembled, the frame halves 82, 83 define a cell compartment (not shown) in which the battery cells 90 are positioned and secured. The battery cells 90 extend along respective longitudinal axes 91, and the frame halves 82, 83 support the opposite axial ends of each cell 90.

The battery cell carrier 80 also includes a circuit board 96 coupled to a terminal block 94 on the top surface (e.g., top side) of the battery cell carrier 80. The circuit board 96 and is in electrical communication with the cell connectors 88 and the battery pack terminals 93. The illustrated cell connectors 88 are coupled to lateral sides of the module frame 81and include contacts 89 that extend through openings formed in the module frame 81 to engage the cell terminals 92 at the ends of the battery cells 90. The cell connectors 88 electrically connect cell terminals 92 of the battery cells 90 with the battery pack terminals 93.

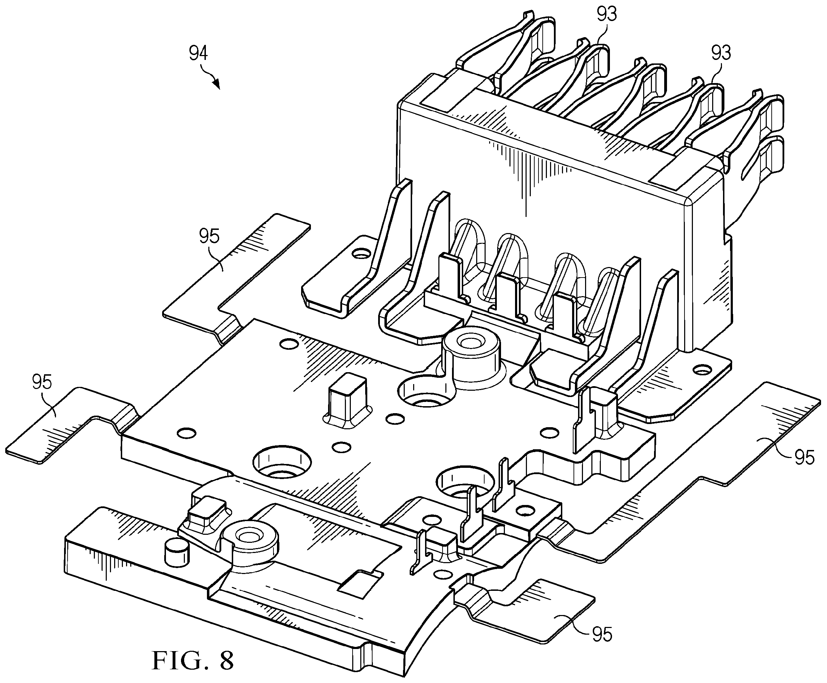

The illustrated battery pack terminals 93 are also coupled to the terminal block 94 on the top side of the battery cell carrier 80 and provides electrical communication between the battery cell carrier 80 and the electrical device when the battery pack 10 is coupled to the electrical device. In some constructions, the battery cell carrier 80 includes a nominal voltage of about 18 volts. In other constructions, the nominal voltage of the battery cell carrier 80 can be greater or less than 18 volts (e.g., 12 volts, 40 volts, etc.). In the illustrated construction, the terminal block 94 includes strap elements 95 (FIGS. 6A, 6B, 8) that are coupled to the cell connectors 88 via laser welding.

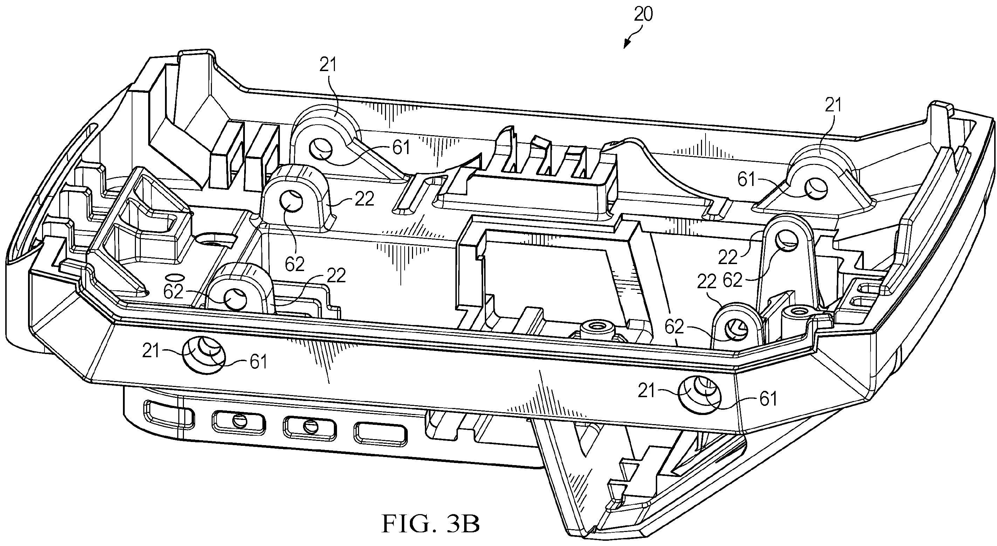

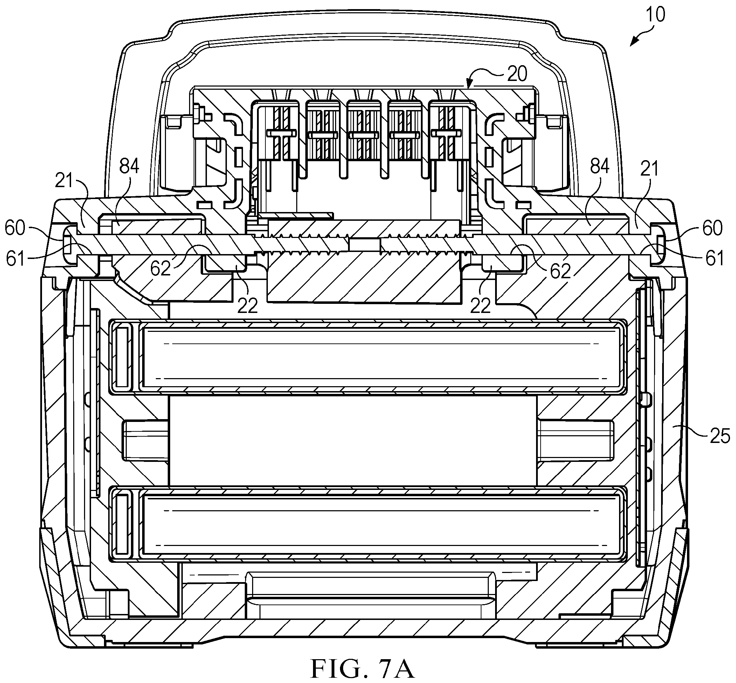

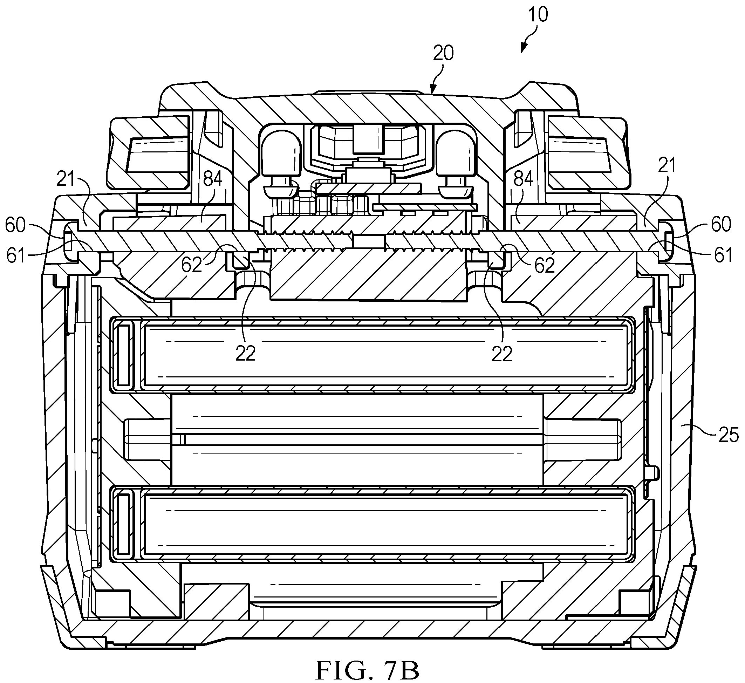

With reference to FIGS. 3A, 3B, 7A, and 7B the upper housing portion 20 is connected to the battery cell carrier 80 with threaded fasteners 60 that extend through complementary fastening holes 61 and 62 and through a one of the screw bosses 84 formed on the first frame half 82 and the screw bosses 21 and 22 formed in the upper housing portion 20 creating a double shear condition on each side of each of the screw bosses 84. In the depicted construction, the threaded fasteners 60 pass through the upper housing portion 20 twice on each side of the battery cell carrier 80 via the external screw bosses 21 forming fastening holes 61 and the internal screw bosses 22 forming fastening holes 22.

One or more independent features and/or independent advantages of the invention may be set forth in the claims.

## Claims

1. A battery pack (10) configured to be coupled to an electrical device, the battery pack comprising:
a plurality of battery cells (90);
a battery cell carrier (80) configured to support the plurality of battery cells, the battery cell carrier having a plurality of connector screw bosses (84) formed on a top side;
a housing (15) having an upper housing portion (20) and a lower housing portion (25) defining an internal compartment configured to receive the battery cell carrier (80), the upper housing portion (20) having an outer screw boss (21) on each lateral side and a respective inner screw boss (22) formed on an inner surface of the upper housing portion; and
wherein the upper housing portion (20) is connected to the battery cell carrier (80) with a plurality of first threaded fasteners (60) each extending through one of the outer screw bosses (21), a respective one of the plurality of connector screw bosses (84), and a respective inner screw boss (22) creating a double shear condition on each side of each of respective one of the plurality of connector screw bosses.

2. The battery pack of claim 1, wherein each of the outer screw bosses (21), the respective one of the plurality of connector screw bosses (84), and the respective inner screw bosses (22) are aligned.

3. The battery pack of claim 1, wherein each of the plurality of first threaded fasteners (60) pass through the upper housing portion (20) twice and on one side of the battery cell carrier (80).

4. The battery pack of claim 1, wherein the lower housing portion (25) is connected to the battery cell carrier (80) with a plurality of second threaded fasteners (70).

5. The battery pack of claim 1, wherein the electrical device is a power tool.

6. The battery pack of claim 1, wherein the battery cell carrier: (80) includes a first half portion (82) and a second half portion (83).

7. The battery pack of claim 6, wherein the first half portion (82) and the second half portion (83) are connected via a plurality of third threaded fasteners (85).

8. The battery pack of claim 6, wherein the plurality of connector screw bosses (84) is formed on the first half portion (82).

9. The battery pack of claim 1, wherein each of the plurality of battery cells (90) are cylindrical-shaped.

10. The battery pack of claim 1, wherein the plurality of battery cells (90) supported in the battery cell carrier (80) are in a compact arrangement.

11. The battery pack of claim 1, wherein the plurality of first threaded fasteners (60) are screws.

12. The battery pack of claim 1, further comprising a terminal block (94) coupled to the battery cell carrier (80) on the top side and providing electrical communication between the battery cell carrier (80) and the electrical device.

13. The battery pack of claim 12, wherein the battery cell carrier (80) includes a plurality of cell connectors (88) configured to engage with cell terminals (92) of each of the plurality of battery cells (90), and wherein the terminal block (94) includes a plurality of strap elements (95) each coupled to one of the plurality of cell connectors (88).

14. A battery pack (10) configured to be coupled to an electrical device, the battery pack comprising:
a plurality of battery cells (90);
a battery cell carrier (80) configured to support the plurality of battery cells, the battery cell carrier having a plurality of connector screw bosses (84) formed on a top side;
a terminal block (94) coupled to the battery cell carrier (80) on the top side and providing electrical communication between the battery cell carrier and the electrical device;
a housing (15) having an upper housing portion (20) comprising an outer screw boss (21) on each lateral side and a respective inner screw boss (22) formed on an inner surface of the upper housing portion; and
wherein the upper housing portion (20) is connected to the battery cell carrier (80) with a plurality of first threaded fasteners (60) each extending through one of the outer screw bosses (21), a respective one of the plurality of connector screw bosses (84), and a respective inner screw boss (22) creating a double shear condition on each side of each of respective one of the plurality of connector screw bosses.

15. The battery pack of claim 14, wherein the housing (15) includes a lower housing portion (25), wherein the upper housing portion (20) and the lower housing portion (25) define an internal compartment configured to receive the battery cell carrier (80).

16. The battery pack of claim 15, wherein the lower housing portion (25) is connected to the battery cell carrier (80) with a plurality of second threaded fasteners (70).

17. The battery pack of claim 14, wherein the battery cell carrier (80) includes a plurality of cell connectors (88) configured to engage with cell terminals (92) of each of the plurality of battery cells, and wherein the terminal block (94) includes a plurality of strap elements (95) each coupled to one of the plurality of cell connectors (88).

18. A battery pack (10) configured to be coupled to an electrical device, the battery pack comprising:
a plurality of battery cells (90);
a battery cell carrier (80) configured to support the plurality of battery cells, the battery cell carrier having a plurality of connector screw bosses (84) formed on a top side;
a housing (15) having an upper housing portion (20) comprising an outer screw boss (21) on each lateral side and a respective inner screw boss (22) formed on an inner surface of the upper housing portion; and
wherein the upper housing portion (20) is connected to the battery cell carrier (80) with a plurality of first threaded fasteners (60) each extending through one of the outer screw bosses (21), a respective one of the plurality of connector screw bosses (84), and a respective inner screw boss (22) creating a double shear condition on each side of each of respective one of the plurality of connector screw bosses (84), and
wherein each of the outer screw bosses (21), the respective one of the plurality of connector screw bosses (84), and the respective inner screw bosses (22) are aligned.

19. The battery pack of claim 18, further comprising a terminal block (94) coupled to the battery cell carrier (80) on the top side and providing electrical communication between the battery cell carrier (80) and the electrical device.

20. The battery pack of claim 19, wherein the battery cell carrier (80) includes a plurality of cell connectors (88) configured to engage with cell terminals of each of the plurality of battery cells (90), and wherein the terminal block (94) includes a plurality of strap elements (95) each coupled to one of the plurality of cell connectors (88).

## Patentansprüche

1. Batteriepack (10), der zum Koppeln mit einem elektrischen Gerät konfiguriert ist, wobei der Batteriepack umfasst:
Eine Vielzahl von Batteriezellen (90);
einen Batteriezellenträger (80), der zum Tragen der Vielzahl von Batteriezellen konfiguriert ist, wobei der Batteriezellenträger eine Vielzahl von Anschlussschraubenvorsprüngen (84) aufweist, die auf einer Oberseite gebildet sind;
ein Gehäuse (15) mit einem oberen Gehäuseabschnitt (20) und einem unteren Gehäuseabschnitt (25), die ein Innenfach definieren, das zur Aufnahme des Batteriezellenträgers (80) konfiguriert ist, wobei der obere Gehäuseabschnitt (20) an jeder lateralen Seite einen äußeren Schraubdom (21) und an einer Innenfläche des oberen Gehäuseabschnitts einen jeweiligen Schraubdom (22) aufweist; und
wobei der obere Gehäuseabschnitt (20) mit dem Batteriezellenträger (80) über eine Vielzahl von ersten Gewindebefestigungselementen (60) verbunden ist, die sich jeweils durch einen der äußeren Schraubdome (21), einen jeweiligen der Vielzahl von Anschlussschraubenvorsprüngen (84) und einen jeweiligen inneren Schraubdom (22) erstrecken, wodurch auf jeder Seite jedes jeweiligen der Vielzahl von Anschlussschraubenvorsprüngen eine doppelte Scherbedingung geschaffen wird.

2. Batteriepack nach Anspruch 1, wobei jeder der äußeren Schraubdome (21), der jeweilige der Vielzahl von Anschlussschraubenvorsprüngen (84) und die jeweiligen inneren Schraubdomen (22) ausgerichtet sind.

3. Batteriepack nach Anspruch 1, wobei jedes der Vielzahl von ersten Gewindebefestigungselementen (60) zweimal und auf einer Seite des Batteriezellenträgers (80) durch den oberen Gehäuseabschnitt (20) verläuft.

4. Batteriepack nach Anspruch 1, wobei der untere Gehäuseabschnitt (25) mit einer Vielzahl von zweiten Gewindebefestigungen (70) mit dem Batteriezellenträger (80) verbunden ist.

5. Batteriepack nach Anspruch 1, wobei das elektrische Gerät ein Elektrowerkzeug ist.

6. Batteriepack nach Anspruch 1, wobei der Batteriezellenträger (80) einen ersten Halbabschnitt (82) und einen zweiten Halbabschnitt (83) umfasst.

7. Batteriepack nach Anspruch 6, wobei der erste Halbabschnitt (82) und der zweite Halbabschnitt (83) über eine Vielzahl von dritten Gewindebefestigungselementen (85) verbunden sind.

8. Batteriepack nach Anspruch 6, wobei die Vielzahl von Anschlussschraubenvorsprüngen (84) auf dem ersten Halbabschnitt (82) ausgebildet ist.

9. Batteriepack nach Anspruch 1, wobei jede der Vielzahl von Batteriezellen (90) eine zylindrische Form aufweist.

10. Batteriesatz nach Anspruch 1, wobei sich die Vielzahl der im Batteriezellenträger (80) gelagerten Batteriezellen (90) in einer kompakten Anordnung befindet.

11. Batteriepack nach Anspruch 1, wobei die Vielzahl der ersten Gewindebefestigungselemente (60) Schrauben sind.

12. Batteriepack nach Anspruch 1, der weiterhin einen Anschlussblock (94) umfasst, der mit dem Batteriezellenträger (80) auf der Oberseite verbunden ist und eine elektrische Verbindung zwischen dem Batteriezellenträger (80) und dem elektrischen Gerät herstellt.

13. Batteriepack nach Anspruch 12, wobei der Batteriezellenträger (80) eine Vielzahl eine Vielzahl von Zellverbindern (88) umfasst, die zum Eingriff mit Zellanschlüssen (92) jeder der Vielzahl von Batteriezellen (90) konfiguriert sind, und wobei der Anschlussblock (94) eine Vielzahl von Bandelementen (95) umfasst, die jeweils mit einem der Vielzahl von Zellverbindern (88) gekoppelt sind.

14. Batteriepack (10), der zum Koppeln mit einem elektrischen Gerät konfiguriert ist, wobei der Batteriepack umfasst:
Eine Vielzahl von Batteriezellen (90);
einen Batteriezellenträger (80), der zum Tragen der Vielzahl von Batteriezellen konfiguriert ist, wobei der Batteriezellenträger eine Vielzahl von Anschlussschraubenvorsprüngen (84) aufweist, die auf einer Oberseite gebildet sind;
einen Anschlussblock (94), der auf der Oberseite mit dem Batteriezellenträger (80) verbunden ist und eine elektrische Verbindung zwischen dem Batteriezellenträger und dem elektrischen Gerät bereitstellt;
ein Gehäuse (15) mit einem oberen Gehäuseabschnitt (20), der an jeder lateralen Seite einen äußeren Schraubvorsprung (21) umfasst und an einer Innenfläche des Gehäuseabschnitts einen jeweiligen inneren Schraubvorsprung (22) aufweist; und
wobei der obere Gehäuseabschnitt (20) mit dem Batteriezellenträger (80) über eine Vielzahl von ersten Gewindebefestigungselementen (60) verbunden ist, die sich jeweils durch einen der äußeren Schraubdome (21), einen jeweiligen der Vielzahl von Anschlussschraubenvorsprüngen (84) und einen jeweiligen inneren Schraubdom (22) erstrecken, wodurch auf jeder Seite jedes jeweiligen der Vielzahl von Anschlussschraubenvorsprüngen eine doppelte Scherbedingung entsteht.

15. Batteriepack nach Anspruch 14, wobei das Gehäuse (15) einen unteren Gehäuseabschnitt (25) umfasst, wobei der obere Gehäuseabschnitt (20) und der untere Gehäuseabschnitt (25) ein Innenfach definieren, das konfiguriert ist, den Batteriezellenträger (80) aufzunehmen.

16. Batteriepack nach Anspruch 15, wobei der untere Gehäuseabschnitt (25) mit einer Vielzahl von zweiten Gewindebefestigungselementen (70) mit dem Batteriezellenträger (80) verbunden ist.

17. Batteriepack nach Anspruch 14, wobei der Batteriezellenträger (80) eine Vielzahl von Zellverbindern (88) umfasst, die zum Eingriff mit Zellanschlüssen (92) jeder der Vielzahl von Batteriezellen konfiguriert sind, und wobei der Anschlussblock (94) eine Vielzahl von Bandelementen (95) umfasst, die jeweils mit einem der Vielzahl von Zellverbindern (88) gekoppelt sind.

18. Batteriepack (10), der zum Koppeln mit einem elektrischen Gerät konfiguriert ist, wobei der Batteriepack umfasst:
Eine Vielzahl von Batteriezellen (90);
einen Batteriezellenträger (80), der zum Tragen der Vielzahl von Batteriezellen konfiguriert ist, wobei der Batteriezellenträger eine Vielzahl von Anschlussschraubenvorsprüngen (84) aufweist, die auf einer Oberseite gebildet sind;
ein Gehäuse (15) mit einem oberen Gehäuseabschnitt (20), der an jeder lateralen Seite einen äußeren Schraubvorsprung (21) umfasst und an einer Innenfläche des oberen Gehäuseabschnitts einen jeweiligen inneren Schraubvorsprung (22) aufweist; und
wobei der obere Gehäuseabschnitt (20) mit dem Batteriezellenträger (80) über eine Vielzahl von ersten Gewindebefestigungselementen (60) verbunden ist, die sich jeweils durch einen der äußeren Schraubdome (21), einen jeweiligen der Vielzahl von Anschlussschraubenvorsprüngen (84) und einen jeweiligen inneren Schraubdom (22) erstrecken, wodurch auf jeder Seite jedes jeweiligen der Vielzahl von Anschlussschraubenvorsprüngen (84) eine doppelte Scherbedingung entsteht, und
wobei jeder der äußeren Schraubdome (21), der jeweilige der Vielzahl von Anschlussschraubenvorsprüngen (84) und die jeweiligen inneren Schraubdomen (22) ausgerichtet sind.

19. Batteriepack nach Anspruch 18, der weiterhin einen Anschlussblock (94) umfasst, der mit dem Batteriezellenträger (80) auf der Oberseite verbunden ist und eine elektrische Verbindung zwischen dem Batteriezellenträger (80) und dem elektrischen Gerät bereitstellt.

20. Batteriesatz nach Anspruch 19, wobei der Batteriezellenträger (80) eine Vielzahl von Zellverbindern (88) umfasst, die so konfiguriert sind, dass sie mit den Zellanschlüssen jeder der Vielzahl von Batteriezellen (90) in Eingriff stehen, und wobei der Anschlussblock (94) eine Vielzahl von Bandelementen (95) umfasst, die jeweils mit einem der Vielzahl von Zellverbindern (88) gekoppelt sind.

## Revendications

1. Bloc-batterie (10) configuré pour être couplé à un dispositif électrique, le bloc-batterie comprenant :
une pluralité de cellules de batterie (90) ;
un support de cellules de batterie (80) configuré pour supporter la pluralité de cellules de batterie, le support de cellules de batterie comportant une pluralité de bossages à vis de liaison (84) formés sur un côté supérieur ;
un boîtier (15) comportant une partie supérieure de boîtier (20) et une partie inférieure de boîtier (25) définissant un compartiment interne configuré pour recevoir le support de cellules de batterie (80), la partie supérieure de boîtier (20) comportant un bossage à vis extérieur (21) sur chaque côté latéral et un bossage à vis intérieur (22) respectif formé sur une surface intérieure de la partie supérieure de boîtier ; et
la partie supérieure de boîtier (20) étant reliée au support de cellules de batterie (80) à l'aide d'une pluralité de premiers éléments de fixation filetés (60) s'étendant chacun dans l'un des bossages à vis extérieurs (21), un bossage à vis de liaison respectif parmi la pluralité de bossages à vis de liaison (84) et un bossage à vis intérieur (22) respectif, créant ainsi une condition de double cisaillement de chaque côté de chacun des bossages à vis de liaison respectifs parmi la pluralité de bossages à vis de liaison.

2. Bloc-batterie selon la revendication 1, chacun des bossages à vis extérieurs (21), chacun des bossages à vis de liaison (84) et chacun des bossages à vis intérieurs (22) étant alignés.

3. Bloc-batterie selon la revendication 1, chaque premier élément de fixation fileté parmi la pluralité de premiers éléments de fixation filetés (60) traversant deux fois la partie supérieure de boîtier (20), d'un côté du support de cellules de batterie (80).

4. Bloc-batterie selon la revendication 1, la partie inférieure de boîtier (25) étant reliée au support de cellules de batterie (80) à l'aide d'une pluralité de deuxièmes éléments de fixation filetés (70).

5. Bloc-batterie selon la revendication 1, le dispositif électrique étant un outil à moteur.

6. Bloc-batterie selon la revendication 1, le support de cellules de batterie (80) comprenant une première demi-partie (82) et une seconde demi-partie (83).

7. Bloc-batterie selon la revendication 6, la première demi-partie (82) et la seconde demi-partie (83) étant reliées par l'intermédiaire d'une pluralité de troisièmes éléments de fixation filetés (85).

8. Bloc-batterie selon la revendication 6, la pluralité de bossages à vis de liaison (84) étant formée sur la première demi-partie (82).

9. Bloc-batterie selon la revendication 1, chaque cellule de batterie de la pluralité de cellules de batterie (90) étant de forme cylindrique.

10. Bloc-batterie selon la revendication 1, la pluralité de cellules de batterie (90) supportées dans le support de cellules de batterie (80) étant agencées de manière compacte.

11. Bloc-batterie selon la revendication 1, la pluralité de premiers éléments de fixation filetés (60) étant des vis.

12. Bloc-batterie selon la revendication 1, comprenant en outre un bornier (94) accouplé au support de cellules de batterie (80) sur le côté supérieur et assurant une communication électrique entre le support de cellules de batterie (80) et le dispositif électrique.

13. Bloc-batterie selon la revendication 12, le support de cellules de batterie (80) comprenant une pluralité de connecteurs de cellule (88) configurés pour s'engager sur des bornes de cellule (92) de chaque cellule de batterie de la pluralité de cellules de batterie (90), et le bornier (94) comprenant une pluralité d'éléments sangles (95) accouplés chacun à un connecteur de cellule de la pluralité de connecteurs de cellule (88).

14. Bloc-batterie (10) configuré pour être couplé à un dispositif électrique, le bloc-batterie comprenant :
une pluralité de cellules de batterie (90) ;
un support de cellules de batterie (80) configuré pour supporter la pluralité de cellules de batterie, le support de cellules de batterie comportant une pluralité de bossages à vis de liaison (84) formés sur un côté supérieur ;
un bornier (94) accouplé au support de cellules de batterie (80) sur le côté supérieur et assurant une communication électrique entre le support de cellules de batterie et le dispositif électrique ;
un boîtier comportant une partie supérieure de boîtier (20) comprenant un bossage à vis extérieur (21) sur chaque côté latéral et un bossage à vis intérieur (22) respectif formé sur une surface intérieure de la partie supérieure de boîtier ; et
la partie supérieure de boîtier (20) étant reliée au support de cellules de batterie (80) à l'aide d'une pluralité de premiers éléments de fixation filetés (60) s'étendant chacun dans l'un des bossages à vis extérieurs (21), un bossage à vis de liaison respectif parmi la pluralité de bossages à vis de liaison (84) et un bossage à vis intérieur (22) respectif, créant ainsi une condition de double cisaillement de chaque côté de chacun des bossages à vis de liaison respectifs parmi la pluralité de bossages à vis de liaison.

15. Bloc-batterie selon la revendication 14, le boîtier (15) comprenant une partie inférieure de boîtier (25), la partie supérieure de boîtier (20) et la partie inférieure de boîtier (25) définissant un compartiment interne configuré pour recevoir le support de cellules de batterie (80).

16. Bloc-batterie selon la revendication 15, la partie inférieure de boîtier (25) étant reliée au support de cellules de batterie (80) à l'aide d'une pluralité de deuxièmes éléments de fixation filetés (70).

17. Bloc-batterie selon la revendication 14, le support de cellules de batterie (80) comprenant une pluralité de connecteurs de cellule (88) configurés pour s'engager sur des bornes de cellule (92) de chaque cellule de batterie de la pluralité de cellules de batterie, et le bornier (94) comprenant une pluralité d'éléments sangles (95) accouplés chacun à un connecteur de cellule de la pluralité de connecteurs de cellule (88).

18. Bloc-batterie (10) configuré pour être couplé à un dispositif électrique, le bloc-batterie comprenant :
une pluralité de cellules de batterie (90) ;
un support de cellules de batterie (80) configuré pour supporter la pluralité de cellules de batterie, le support de cellules de batterie comportant une pluralité de bossages à vis de liaison (84) formés sur un côté supérieur ;
un boîtier comportant une partie supérieure de boîtier (20) comprenant un bossage à vis extérieur (21) sur chaque côté latéral et un bossage à vis intérieur (22) respectif formé sur une surface intérieure de la partie supérieure de boîtier ; et
la partie supérieure de boîtier (20) étant reliée au support de cellules de batterie (80) à l'aide d'une pluralité de premiers éléments de fixation filetés (60) s'étendant chacun dans l'un des bossages à vis extérieurs (21), un bossage à vis de liaison respectif parmi la pluralité de bossages à vis de liaison (84) et un bossage à vis intérieur (22) respectif, créant ainsi une condition de double cisaillement de chaque côté de chacun des bossages à vis de liaison respectifs parmi la pluralité de bossages à vis de liaison (84), et
chacun des bossages à vis extérieurs (21), chacun des bossages à vis de liaison (84) et chacun des bossages à vis intérieurs (22) étant alignés.

19. Bloc-batterie selon la revendication 18, comprenant en outre un bornier (94) accouplé au support de cellules de batterie (80) sur le côté supérieur et assurant une communication électrique entre le support de cellules de batterie (80) et le dispositif électrique.

20. Bloc-batterie selon la revendication 19, le support de cellules de batterie (80) comprenant une pluralité de connecteurs de cellule (88) configurés pour s'engager sur des bornes de cellule de chaque cellule de batterie de la pluralité de cellules de batterie (90), et le bornier (94) comprenant une pluralité d'éléments sangles (95) accouplés chacun à un connecteur de cellule de la pluralité de connecteurs de cellule (88).
